# EUROPEAN PATENT APPLICATION

(11) **EP 4 346 056 A1**
(43) Date of publication of application: **03.04.2024**
(21) Application number: 23173191.0
(22) Date of filing: 12.05.2023
(51) Int. Cl.: H02J 7/00, A47J 43/07, B01F 27/90

(54) **ELECTRIC STIRRER AND ITS CHARGING BASE**

(30) Priority: 20.09.2022 CN 202211142767; 18.01.2023 CN 202310055741
(71) Applicant: Zhuhai Kelitong Electronic Co., Ltd, Zhuhai City, Guangdong (CN)
(72) Inventor: SONG, Xiaoxian, Hongqi Town, Jinwan District, Zhuhai City, Guangdong Province (CN); ZHU, Wei, Hongqi Town, Jinwan District, Zhuhai City, Guangdong Province (CN); ZHU, Haihong, Hongqi Town, Jinwan District, Zhuhai City, Guangdong Province (CN)
(74) Representative: Viering, Jentschura & Partner mbB Patent- und Rechtsanwälte

(57) **Abstract**

The present invention discloses an electric stirrer and its charging base, wherein said electric stirrer comprises a stirrer body and a stirring component, said stirring component is provided at the bottom end of said stirrer body, and a supporting part is provided on the bottom of said stirrer body; said charging base comprises a charging base body, a bearing part is provided in said charging base body, and said stirrer body is supported on said bearing part of said charging base body through said supporting part, so that said stirring component is located below said stirrer body and suspended. While avoiding the risk of any liquid flowing into the stirrer body to damage the internal circuitry or motor, the technical solution of the present invention prevents the stirring component from contacting any other item to avoid the contamination risk of the stirring component. In addition, the stirrer body can be placed, charged and taken for use conveniently, and can be taken in a normal gesture without any excess motion.

## Description

### Technical field

The present invention generally relates to the field of household electric appliances, and in particular to an electric stirrer and its charging base.

### Background

Rechargeable electric stirrers currently on the market are usually of the body charging type, i.e., a charging port is provided on the body and connected to an external charging cable for charging. However, it is inconvenient to operate because the charging cable has to be plugged and unplugged every time. Therefore, a wireless charging stirrer has emerged on the market.

The Chinese patent application (notice of authorization number: CN2601611Y, published on February 4, 2004) discloses a split inductive charging stirrer, comprising a body and a charging base, wherein a PCB is provided in the charging base, the circuitry on the PCB consists of a rectifying circuit, an amplifying circuit and an inductive charging circuit, the input of the rectifying circuit is connected to the mains, its output is connected to the input of the amplifying circuit, the output of the amplifying circuit is connected to End A of the induction coil in the inductive charging circuit provided in the charging base, and End B of the induction coil in the inductive charging circuit provided in the body is connected to a rechargeable battery.

In the above solution, when the body of the stirrer is placed on the charging base, it is inverted, i.e., the stirring head faces upward, and there is the risk of any liquid flowing back into the body to damage the internal circuitry or motor, which is likely to result in a stirrer malfunction.

### Summary

While avoiding the risk of any liquid flowing into the stirrer body to damage the internal circuitry or motor, the present invention prevents the stirring component from contacting any other item to avoid the contamination risk of the stirring component. The electric stirrer and its charging base whose stirrer body can be placed, charged and taken for use conveniently are realized through the following technical solution:
An electric stirrer and its charging base, wherein said electric stirrer comprises a stirrer body and a stirring component, said stirring component is provided at the bottom end of said stirrer body, and a supporting part is provided on the bottom of said stirrer body;
Said charging base comprises a charging base body, a bearing part is provided in said charging base body, and said stirrer body is supported on said bearing part of said charging base body through said supporting part, so that said stirring component is located below said stirrer body and suspended.
Optionally, a master circuit board and a first conductive part are provided in said stirrer body, said master circuit board and said first conductive part are electrically connected, and one end of said first conductive part is exposed on the surface of said supporting part;
A charging circuit board and a second conductive part are provided in said charging base body, said charging circuit board and said second conductive part are electrically connected, and one end of said second conductive part is exposed on the surface of said charging base body;
Wherein, when said supporting part is supported in said charging base body, said first conductive part abuts on said second conductive part.

Optionally, the outer diameter of said supporting part decreases gradually in the direction of approaching said stirring component; a vacant site is provided in said charging base body, said bearing part is formed at the inner ring of said vacant site, the inner diameter of said vacant site decreases gradually from the top end of said charging base body to the bottom end of said charging base body, and the inner diameter of said vacant site matches the outer diameter of said supporting part.

Optionally, one end of said first conductive part protrudes from the side of said supporting part; one end of said second conductive part protrudes from the side of the inner ring of said charging base body.

Optionally, a recess is provided on the surface of said supporting part, one end of said first conductive part protrudes from the surface of said recess; a bulge is provided on the side of the inner ring of said charging base body, said bulge matches said recess, said second conductive part protrudes from the surface of said bulge.

Optionally, the bottom surface of said supporting part is a flat surface; a vacant site is provided in said charging base body, said bearing part is formed at the inner ring of said vacant site, a supporting surface is provided at the inner ring of said vacant site, said supporting surface is a flat surface, and said supporting surface matches the bottom surface of said supporting part.

Optionally, one end of said first conductive part protrudes from the bottom surface of said supporting part; one end of said second conductive part protrudes from said supporting surface.

Optionally, a positioning groove is provided on the side of said supporting part; a positioning rib is provided on the side of the inner ring of said charging base body, and said positioning rib matches said positioning groove.

Optionally, a notch is provided on the surface of said charging base body, and said notch is communicated with said vacant site and for said stirring component to pass.

Optionally, a driving component is provided in said stirrer body, said stirring component comprises a connecting rod and a bubbler, one end of said connecting rod is connected to said driving component, and the other end of said connecting rod protrudes from the bottom end of said stirrer body and is connected to said bubbler.

Optionally, said charging base body is a circular structure, a bracket and/or a hanger are/is provided on said charging base body, and said charging base body stands on a horizontal surface through said bracket or is attached to a wall through said hanger.

Such design has the following advantages: In the technical solution of the present invention, when the stirrer body is supported on the bearing part of the charging base body through the supporting part, the stirring component is located below the stirrer body and suspended, i.e., the stirring component faces downward to keep space. Therefore, while avoiding the risk of any liquid flowing into the stirrer body to damage the internal circuitry or motor, it prevents the stirring component from contacting any other item to avoid the contamination risk of the stirring component. In addition, the stirrer body can be placed, charged and taken for use conveniently, and can be taken in a normal gesture without any excess motion.

### Brief description of the drawings

Fig. 1 is a structural diagram of the assembled electric stirrer and its charging base in Embodiment 1 of the present invention;
Fig. 2 is a split structural diagram of the electric stirrer and its charging base in Fig. 1;
Fig. 3 is a structural diagram of the charging base in Fig. 1;
Fig. 4 is an exploded structural diagram of the electric stirrer and its charging base in Fig. 1;
Fig. 5 is a structural diagram of the charging base in an embodiment of the present invention;
Fig. 6 is a structural diagram of the charging base in another embodiment of the present invention;
Fig. 7 is a structural diagram of the charging base in yet another embodiment of the present invention;
Fig. 8 is a structural diagram of the assembled electric stirrer and its charging base in Embodiment 2 of the present invention;
Fig. 9 is a split structural diagram of the electric stirrer and its charging base in Fig. 8;
Fig. 10 is a split structural diagram of the electric stirrer and its charging base in Fig. 8;
Fig. 11 is an exploded structural diagram of the electric stirrer in Fig. 8;
Fig. 12 is an exploded structural diagram of the charging base in Fig. 8.

The meanings of the marks in the drawings are as follows:
11) Stirrer body; 111) front shell; 112) rear shell; 113) first positioning part; 114) supporting part; 115) positioning groove; 116) first fixing slot; 117) second fixing slot; 12) master circuit board; 13) rechargeable battery; 14) first conductive part; 141) fixing hole; 15) charging indicator; 16) driving component; 17) stirring component; 171) connecting rod; 172) bubbler; 18) connecting piece; 19) fixing stand; 191) fixing column;
21) Charging base body; 211) upper cap; 212) lower cap; 213) second positioning part; 214) notch; 215) charging port; 216) positioning hole; 217) positioning slot; 218) clamping slot; 219) buckle; 22) charging circuit board; 23) second conductive part; 24) charging socket; 25) supporting surface; 26) positioning rib; 27) vacant site;
31) Bracket; 311) positioning column; 312) positioning rod; 313) under frame;
32) Hanger; 321) clamping rib; 322) clamping hook.

### Detailed description

The present invention is further described in detailed by reference to the drawings and embodiments.

### Embodiment 1

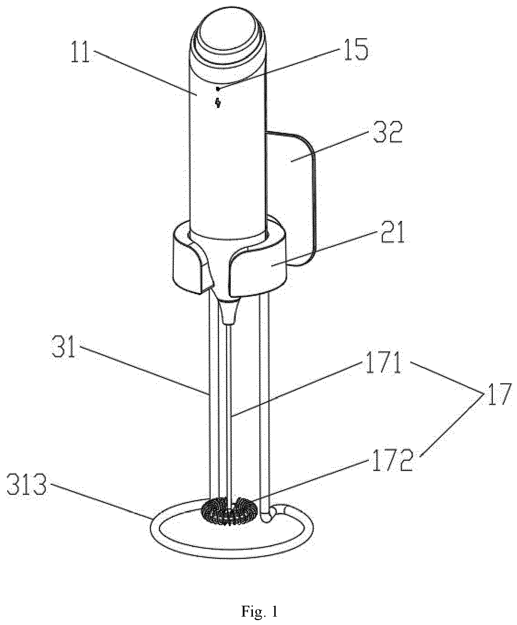

Referring to Fig. 1, an embodiment of the present invention provides an electric stirrer and its charging base, wherein the charging base charges the electric stirrer.

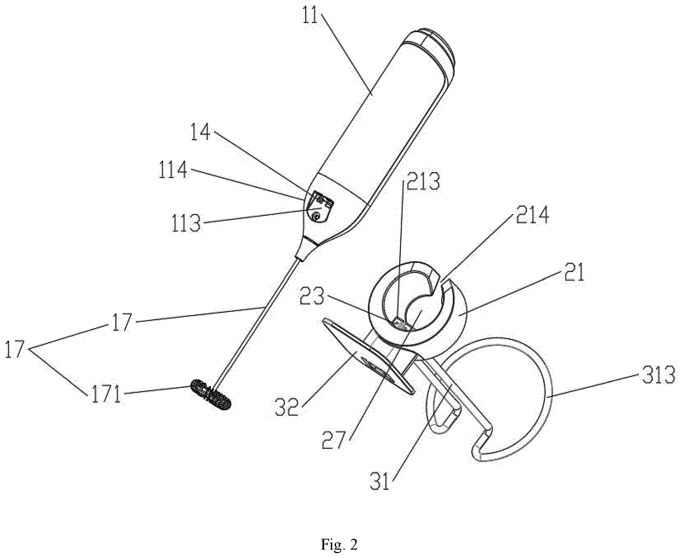

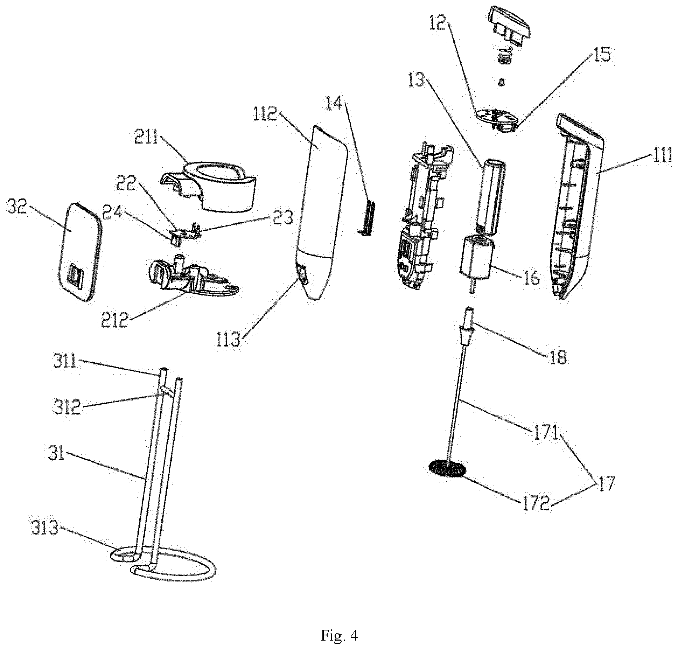

Specifically, as shown in Fig. 2 and Fig. 4, an electric stirrer provided by the present embodiment comprises a stirrer body 11, said stirrer body 11 comprises a front shell 111 and a rear shell 112 paired with each other, a master circuit board 12 and a rechargeable battery 13 are provided in said stirrer body 11, said master circuit board 12 and said first rechargeable battery 13 are electrically connected, said electric stirrer also comprises a first conductive part 14, a first positioning part 113 is provided on the surface of said stirrer body 11, said first conductive part 14 is provided in said stirrer body 11 and electrically connected to said master circuit board 12, and one end of said first conductive part 14 is exposed on the surface of said first positioning part 113.

As shown in Fig. 2 and Fig. 4, a charging base provided by the present embodiment comprises a charging base body 21, said charging base body 21 comprises an upper cap 211 and a lower cap 212 paired with each other, a charging circuit board 22 is provided in said charging base body 21, said charging base also comprises a second conductive part 23, a second positioning part 213 is provided on the surface of said charging base body 21, said second conductive part 23 is provided in said charging base body 21 and electrically connected to said charging circuit board 22, and one end of said second conductive part 23 is exposed on the surface of said second positioning part 213.

Wherein, when said first positioning part 113 and said second positioning part 213 are positioned mutually, said first conductive part 14 abuts on said second conductive part 23, so that said charging base charges said electric stirrer.

When the first positioning part 113 of the electric stirrer and the second positioning part 213 of charging base match, the electric stirrer and its charging base can be positioned relatively, so that the first conductive part 14 of the electric stirrer and the second conductive part 23 of the charging base can contact each other accurately to realize the electric conduction between the master circuit board 12 of the electric stirrer and the charging circuit board 22 of the charging base, thereby charging the rechargeable battery 13 of the electric stirrer through the charging base when the charging base is connected to an external power source.

In this technical solution, the positioning function of the first positioning part 113 and the second positioning part 213, and the electric conduction function of the first conductive part 14 and the second conductive part 23 enable the charging base to charge the electric stirrer, thereby sparing the trouble of plugging and unplugging the charging cable in conventional wired charging, realizing convenient charging at any time, avoiding electricity conversion losses during wireless charging, and ensuring high charging efficiency, a reliable charging connection structure and stable charging.

As a practical application scenario, said electric stirrer can be used to make milk foam. This electric stirrer can be used as a handheld electric milk bubbler to make milk foam for coffee and other drinks. Of course, it can be used to stir other liquids.

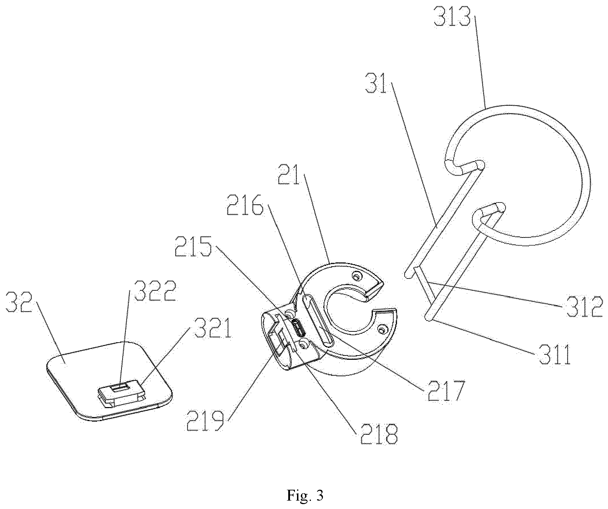

Specifically, referring to Fig. 3 and Fig. 4, said charging base also comprises a charging socket 24, which is provided in said charging base body 21 and electrically connected to said charging circuit board 22, a charging port 215 is opened on the surface of said charging base body 21, and said charging socket 24 is located at said charging port 215. Said charging port 215 is inserted through the interface of the power cable, and the plug of the power cable is inserted into the mains socket (power source), so that the charging base can be supplied with power by the mains, thereby charging the electric stirrer through the charging base when the first conductive part 14 and the second conductive part 23 are connected, wherein the charging port 215 of the charging base can remain connected to the power source for a long time, and the electric stirrer can be charged at any time when placed on the charging base to ensure that the body is live at any time.

As shown in Fig. 1 and Fig. 2, in an embodiment, said stirrer body 11 is a column structure, and said first positioning part 113 is provided on the surface of said stirrer body 11; said charging base body 21 is a circular structure, so that the center of said charging base body 21 forms a vacant site 27, said bearing part is formed at the inner ring of said vacant site 27, and said second positioning part 213 is provided on the side of the inner ring of said charging base body 21. The inner diameter of the ring of the charging base body 21 matches the outer diameter of the column of the stirrer body 11, so that when the stirrer body 11 is placed at the inner ring of the charging base body 21, the charging base body 21 can support the stirrer body 11.

Further, referring to Fig. 1 and Fig. 2, the bottom of said stirrer body 11 forms a supporting part 114, and the outer diameter of said supporting part 114 decreases gradually from the top end of said stirrer body 11 to the bottom end of said stirrer body 11; the inner diameter of said vacant site 27 decreases gradually from the top end of said charging base body 21 to the bottom end of said charging base body 21. The shape of the supporting part 114 at the bottom end of the stirrer body 11 is similar to a funnel, wherein its outer diameter is larger in the upper part and smaller in the lower part, and correspondingly, the shape of the charging base body 21 is similar to a circular tray, wherein its inner diameter is larger in the upper part and smaller in the lower part; the charging base body 21 bears the stirrer body 11, so that the charging base can support and vertically position the electric milk bubbler.

As shown in Fig. 2, in an embodiment, said first positioning part 113 is a recess, and one end of said first conductive part 14 protrudes from the surface of said recess; said second positioning part 213 is a bulge, and said second conductive part 23 protrudes from the surface of said bulge; when said recess and said bulge are positioned mutually, said first conductive part 14 abuts on said second conductive part 23. A recess is provided at the bottom end of the electric stirrer, the contact end of first conductive part 14 is exposed on the horizontal bottom surface of the recess, a bulge is provided on the charging base body 21, the contact end of second conductive part 23 is exposed on the horizontal top surface of the bulge, and said bulge can be inserted into said recess and match it through the side for horizontal positioning. In addition, in other embodiments, the first positioning part 113 may be set as a bulge and the second positioning part 213 as a recess, or a positioning and matching structure in any other shape may be used, without restriction in this regard in the present invention.

Specifically, referring to Fig. 1 and Fig. 4, a driving component 16 is provided in said stirrer body 11, said driving component 16 is electrically connected to said master circuit board 12, said electric stirrer also comprises a stirring component 17, said stirring component 17 is provided out of one end of the supporting part 114 of said stirrer body 11, and said driving component 16 is in driving connection with said stirring component 17. In the present embodiment, the driving component 16 is a motor, the stirring component 17 comprises a connecting rod 171 and a bubbler 172, one end of the connecting rod 171 is fixedly connected to the output shaft of the driving component 16 through the connecting piece 18, and a bubbler 171 (spring ring) is provided at the other end of said stirring component 17. When the motor is operating, the stirring component 17 rotates with the high-speed rotation of the output shaft of the driving component 16 to realize milk foam making.

Further, referring to Fig. 1 and Fig. 2, a notch 214 is provided in the circular structure of said charging base body 21, and said notch 214 is communicated with the inner ring side of said charging base body 21 from the outer ring side of said charging base body 21. Said notch 214 of said charging base body 21 forms an open structure, and is for the stirring component 17 of the electric stirrer to pass, so that the electric stirrer can be taken and stored conveniently.

As a preferred embodiment, referring to Fig. 1 and Fig. 4, a charging indicator 15 (LED) is provided on said master circuit board 12, and a light hole corresponding to said charging indicator 15 is provided on said stirrer body 11. When the power source is electrically connected to the charging base, and the electric stirrer is placed vertically on the charging base, due to the weight of the electric stirrer, the contact end of first conductive part 14 abuts against and is electrically connected to the contact end of the second conductive part 23, and the charging indicator 15 is illuminated (indicating the charging state) to indicate that the charging base is electrically connected to the electric stirrer, and the electric stirrer is being charged.

As shown in Fig. 1 and Fig. 3, in an embodiment, said charging base body 21 is used to support the stirrer body 11 of said electric stirrer, a bracket 31 and/or a hanger 32 are/is provided on said charging base body 21, and said charging base body 21 stands on a horizontal surface through said bracket 31 or is attached to a wall through said hanger 32, so that the stirring component 17 of said electric stirrer faces downward to keep space.

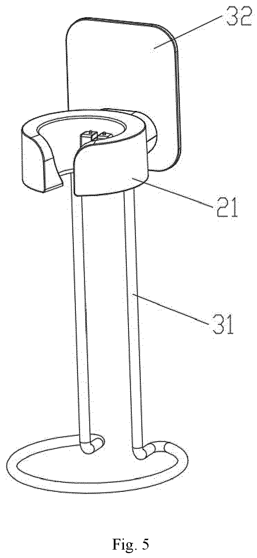

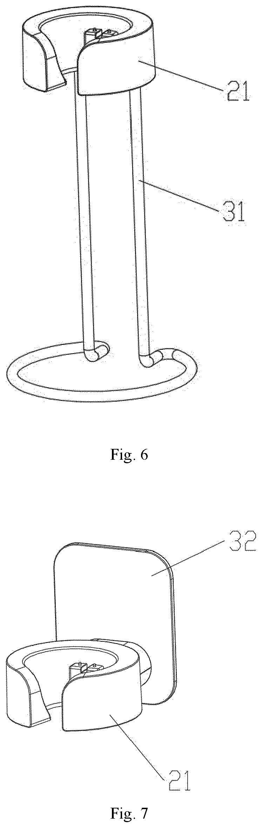

In an embodiment, as shown in Fig. 5, a bracket 31 and a hanger 32 are both provided in the charging base body 21; in another embodiment, as shown in Fig. 6, only a bracket 31 is provided in the charging base body 21; in yet another embodiment, as shown in Fig. 7, only a hanger 32 is provided in the charging base body 21. When a bracket 31 is provided in the charging base body 21, the bracket 31 is connected to the bottom end of the charging base body 21, and the charging base body 21 can stand on a horizontal surface through the bracket 31; when a hanger 32 is provided in the charging base body 21, the hanger 32 is connected to the side of the charging base body 21, and the charging base body 21 can be attached to a wall through the hanger 32. Thus, when the stirrer body 11 of the electric stirrer is placed on the charging base body 21 in a vertically upright posture, the stirring component 17 of the electric stirrer can face downward to keep space, i.e., the stirring component 17 is suspended in the air. Therefore, while avoiding the risk of any liquid flowing into the stirrer body 11 to damage the internal circuitry or motor, it prevents the stirring component 17 from contacting any other item to avoid the contamination risk of the stirring component 17. Of course, in other embodiments, the charging base body 21 may not be provided additionally with a bracket 31 and a hanger 32, but the charging base body 21 itself is set to have a certain height, and a bearing part is provided at a position close to the top of the charging base body 21, so that when the stirrer body 11 of the electric stirrer is placed on the charging base body 21, the stirring component 17 faces downward to keep space, wherein when the stirring component 17 faces downward, it is located below the stirrer body 11 either directly or sideways, i.e., the stirring component 17 may face down vertically or obliquely at a certain angle with the vertical direction (0∼90°).

As shown in Fig. 3, in an embodiment, said bracket 31 and said hanger 32 are detachably connected to said charging base body 21. The bracket 31 and the hanger provided for the charging base body 21 may be used separately. When the bracket 31 is used, the charging base body 21 may be used on a horizontal surface; when the hanger is used, the charging base body 21 may be attached to a wall.

Specifically, positioning holes 216 are provided in said charging base body 21, and positioning columns 311 are provided at the top end of said bracket 31 and may be inserted into said positioning holes 216. Several positioning holes 216 are provided at the bottom end of the stirrer body 11, the same number of positioning columns 311 are provided at the top end of the bracket 31, and the positioning columns 311 are detachably inserted into the positioning holes 216, so that the charging base body 21 can stand on a horizontal surface.

Further, referring to Fig. 3, the number of said positioning holes 216 is at least two, a positioning slot 217 is connected between two said positioning holes 216, the number of said positioning columns 311 is at least two, a positioning rod 312 is connected between two said positioning columns 311, and said positioning rod 312 can be inserted into said positioning slot 217. Taking two positioning holes 216 and two positioning columns 311 as an example, when the two positioning columns 311 are inserted into the two positioning holes 216 respectively, the positioning rod 312 between the two positioning columns 311 is also inserted into the positioning slot 217 between the two positioning holes 216 to support the charging base body 21, making the connection between the bracket 31 and the charging base body 21 firmer.

As shown in Fig. 3, in an embodiment, a clamping rib 321 is provided on said hanger 32, a clamping slot 218 is provided on said charging base body 21, and said clamping rib 321 can be inserted into said clamping slot 218. When the top surface of the clamping rib 321 abuts against the bottom surface of the clamping slot 218, said charging base body 21 can be positioned on said hanger 32, and then attached to a wall through said hanger 32.

Further, referring to Fig. 3, a clamping hook 322 is provided on the surface of said clamping rib 321, a buckle 219 is provided on the inner wall of said clamping slot 218, and when said clamping rib 321 is inserted into said clamping slot 218, said clamping hook 322 is in clamp connection with said buckle 219. The clamping hook 322 is concave, and the buckle 219 is a flexible buckle 219, so that when said buckle 219 is inserted into said clamping hook 322, a click is heard to remind the user. The hanger 32 and the charging base body 21 have been positioned properly.

As shown in Fig. 3, in an embodiment, an under frame 313 is provided at the bottom end of said bracket 31, and said bracket 31 stands on a horizontal surface through said under frame 313. Thus, the charging base body 21 with the bracket 31 can move across desired positions freely so that the charging base body 21 gets close to and is connected to the power source conveniently.

In an embodiment, an adhesive layer is provided on said hanger 32, said hanger 32 is fixed on a wall through an adhesive, or a mounting hole is provided on said hanger 32, and said hanger 32 is fixed on a wall through a locking screw.

### Embodiment 2

Compared to Embodiment 1, Embodiment 2 differs in the matching method between the electric stirrer and its charging base. Embodiment 1 may be referred to for the identical portion, which is not repeated here.

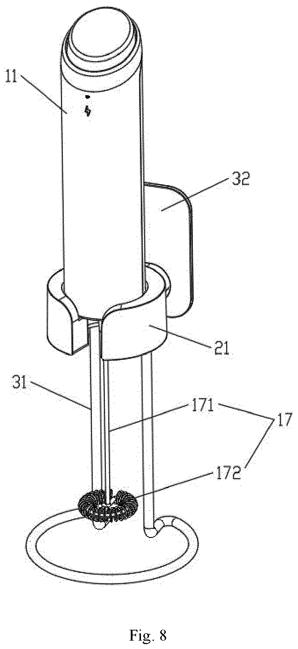

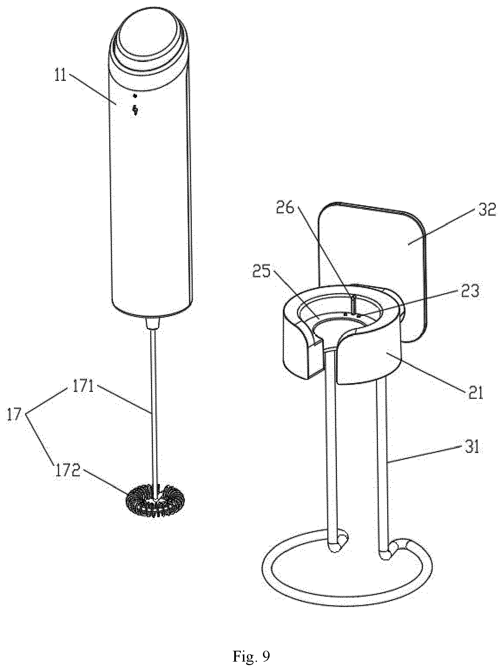

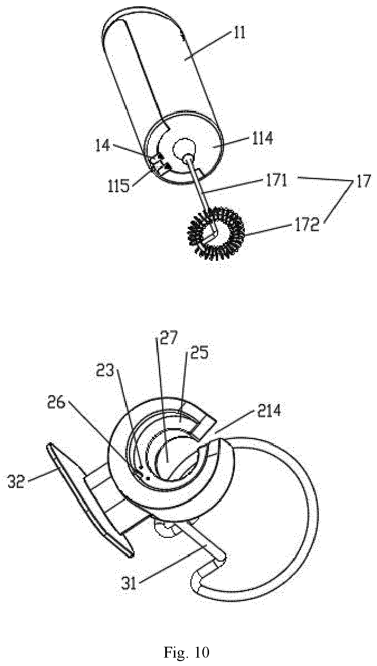

Specifically, as shown in Fig. 8 to Fig. 10, an electric stirrer provided by the present embodiment comprises a stirrer body 11 and a stirring component 17, and said stirring component 17 is provided at the bottom end of said stirrer body 11. Said stirrer body 11 comprises a front shell 111 and a rear shell 112 paired with each other, a master circuit board 12 and a rechargeable battery 13 are provided in said stirrer body 11 and electrically connected, said electric stirrer also comprises a first conductive part 14, which is provided in said stirrer body 11 and electrically connected to said master circuit board 12, and one end of said first conductive part 14 is exposed on the surface of said stirrer body 11.

A charging base provided by the present embodiment comprises a charging base body 21, which comprises an upper cap 211 and a lower cap 212 paired with each other, a charging circuit board 22 is provided in said charging base body 21, said charging base also comprises a second conductive part 23, which is provided in said charging base body 21 and electrically connected to said charging circuit board 22, and one end of said second conductive part 23 is exposed on the surface of said charging base body 21. A bracket 31 and/or a hanger 32 are/is provided on said charging base body 21, and said charging base body 21 stands on a horizontal surface through said bracket 31 or is attached to a wall through said hanger 32.

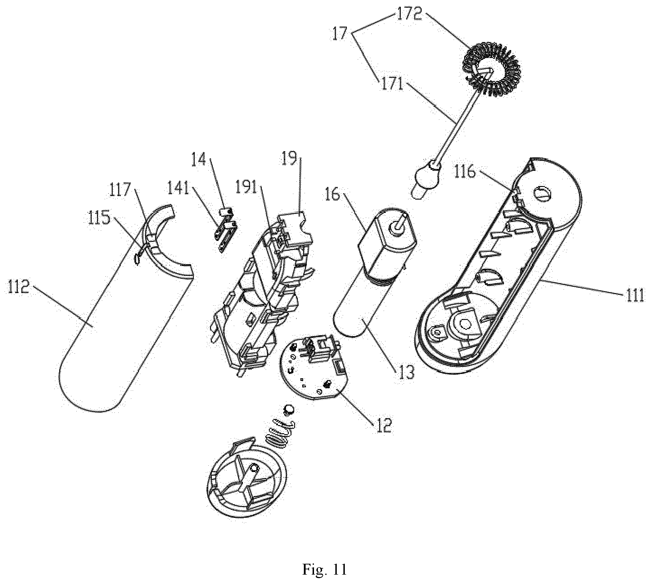

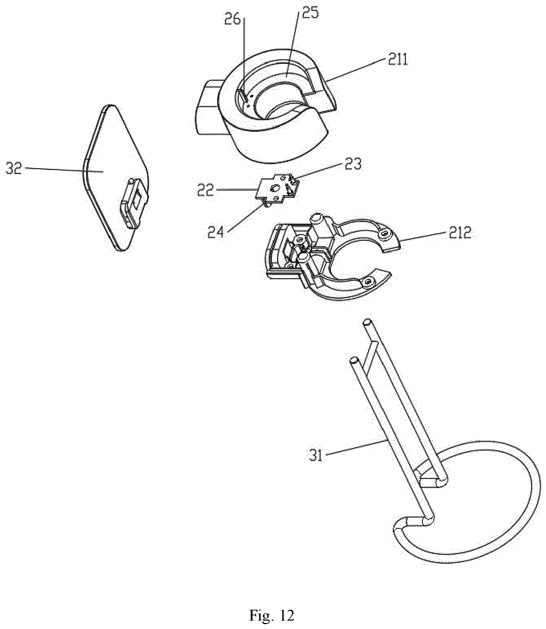

As shown in Fig. 11 and Fig. 12, the bottom surface of said supporting part 114 is a flat surface, a supporting surface 25 is provided at the inner ring of the vacant site 27 of said charging base body 21, and said supporting surface 25 is a flat surface. The supporting surface 25 of the charging base body 21 is matched through the bottom surface of the supporting part 114, so that the charging base body 21 supports the stirrer body 11. In addition, said first conductive part 14 abuts on said second conductive part 23, so that the electric stirrer is charged with said stirring component 17 facing downward to keep space. Therefore, while avoiding the risk of any liquid flowing into the stirrer body 11 to damage the internal circuitry or motor, it prevents the stirring component 17 from contacting any other item to avoid the contamination risk of the stirring component 17.

Optionally, the bottom surface of the supporting part 114 and the supporting surface 25 of the charging base body 21 are not necessarily completely parallel, but may form a certain angle with the horizontal surface (0∼90°). Therefore, when the stirring component 17 faces downward, it is located below the stirrer body 11 either directly or sideways, i.e., the stirring component 17 may face down vertically or obliquely at a certain angle with the vertical direction (0~90°).

Further, as shown in Fig. 11 and Fig. 12, one end of said first conductive part 14 protrudes from the bottom surface of said supporting part 114. One end of said second conductive part 23 protrudes from the supporting surface 25 of said charging base body 21. Thus, when the bottom surface of the supporting part 114 fits the supporting surface 25 of the charging base body 21, the first conductive part 14 abuts on the second conductive part 23 to charge the electric stirrer.

Further, as shown in Fig. 11 and Fig. 12, an upward extending positioning groove 115 is provided on the side of said supporting part 114. A positioning rib 26 extending upward is provided on the side of the inner ring of said charging base body 21. When the stirrer body 11 is placed in the charging base body 21, the positioning rib 26 is inserted into the positioning groove 115, so that the stirrer body 11 and the charging base body 21 can only move relatively in the direction of the positioning rib 26, positioning the first conductive part 14 relative to the second conductive part 23; due to the weight of the stirrer body 11, the first conductive part 14 contacts and is electrically connected to the second conductive part 23, so that when the stirring component 17 is placed downward, the stirrer body 11 can be contacted for charging.

Further, as shown in Fig. 11 and Fig. 12, a fixing stand 19 is provided in said stirrer body 11, a fixing column 191 is provided on said fixing stand 19, and a fixing hole 141 is provided on said first conductive part. The fixing hole 141 of the first conductive part fits over the fixing column 191 of the fixing stand 19, so that the first conductive part is fixed on the fixing stand 19. A first fixing slot 116 is provided on the bottom of the front shell 111, a second fixing slot 117 is provided on the bottom of the rear shell 112, and one end of the first conductive part is placed in the space encircled by the first fixing slot 116 and the second fixing slot 117, and is exposed on the outer surfaces of the front shell 111 and the rear shell 112.

The above detailed description is for feasible embodiments of the present invention, and such embodiments are not intended to restrict the protection scope of the present invention. Any equivalent embodiment or change not deviating from the essence of the present invention should be included in the protection scope of the present invention.

## Claims

1. An electric stirrer and its charging base, **characterized in that** said electric stirrer comprises a stirrer body (11) and a stirring component (17), said stirring component (17) is provided at the bottom end of said stirrer body (11), and a supporting part (114) is provided on the bottom of said stirrer body (11);
Said charging base comprises a charging base body (21), a bearing part is provided in said charging base body (21), and said stirrer body (11) is supported on said bearing part of said charging base body (21) through said supporting part (114), so that said stirring component (17) is located below said stirrer body (11) and suspended.

2. The electric stirrer and its charging base according to Claim 1, **characterized in that** a master circuit board (12) and a first conductive part (14) are provided in said stirrer body (11), said master circuit board (12) and said first conductive part (14) are electrically connected, and one end of said first conductive part (14) is exposed on the surface of said supporting part (114);
A charging circuit board (22) and a second conductive part (23) are provided in said charging base body (21), said charging circuit board (22) and said second conductive part (23) are electrically connected, and one end of said second conductive part (23) is exposed on the surface of said charging base body (21);
Wherein, when said supporting part (114) is supported in said charging base body (21), said first conductive part (14) abuts on said second conductive part (23).

3. The electric stirrer and its charging base according to Claim 2, **characterized in that** the outer diameter of said supporting part (114) decreases gradually in the direction of approaching said stirring component (17); a vacant site (27) is provided in said charging base body (21), said bearing part is formed at the inner ring of said vacant site (27), the inner diameter of said vacant site (27) decreases gradually from the top end of said charging base body (21) to the bottom end of said charging base body (21), and the inner diameter of said charging base body (21) matches the outer diameter of said supporting part (114).

4. The electric stirrer and its charging base according to Claim 3, **characterized in that** one end of said first conductive part (14) protrudes from the side of said supporting part (114); one end of said second conductive part (23) protrudes from the side of the inner ring of said charging base body (21).

5. The electric stirrer and its charging base according to Claim 4, **characterized in that** a recess is provided on the surface of said supporting part (114), and one end of said first conductive part (14) protrudes from the surface of said recess; a bulge is provided on the side of the inner ring of said charging base body (21), said bulge matches said recess, and said second conductive part (23) protrudes from the surface of said bulge.

6. The electric stirrer and its charging base according to Claim 2, **characterized in that** the bottom surface of said supporting part (114) is a flat surface; a vacant site (27) is provided in said charging base body (21), said bearing part is formed at the inner ring of said vacant site (27), a supporting surface is provided at the inner ring of said vacant site (27), said supporting surface is a flat surface, and said supporting surface matches the bottom surface of said supporting part (114).

7. The electric stirrer and its charging base according to Claim 6, **characterized in that** one end of said first conductive part (14) protrudes from the bottom surface of said supporting part (114); one end of said second conductive part (23) protrudes from said supporting surface.

8. The electric stirrer and its charging base according to Claim 7, **characterized in that** a positioning groove (115) is provided on the side of said supporting part (114); a positioning rib (26) is provided on the side of the inner ring of said charging base body (21), and said positioning rib (26) matches said positioning groove (115).

9. The electric stirrer and its charging base according to any of Claims 3-8, **characterized in that** a notch (214) is provided on the surface of said charging base body (21), said notch (214) is communicated with said vacant site (27) and for said stirring component (17) to pass.

10. The electric stirrer and its charging base according to any of Claims 1-8, **characterized in that** a bracket (31) and/or a hanger (32) are/is provided on said charging base body (21), and said charging base body (21) stands on a horizontal surface through said bracket (31) or is attached to a wall through said hanger (32).
